# EUROPEAN PATENT APPLICATION

(11) **EP 1 592 213 A1**
(43) Date of publication of application: **02.11.2005**
(21) Application number: 05103571.5
(22) Date of filing: 29.04.2005
(51) Int. Cl.: H04M 1/725

(54) **Mobile station for radio communications and an actuator therefor**

(30) Priority: 30.04.2004 GB 0409634
(71) Applicant: MOTOROLA, INC., Schaumburg, IL 60196 (US)
(72) Inventor: Schaefer, Holger, 13507 Berlin (DE)
(74) Representative: McCormack, Derek James

(57) **Abstract**

A mobile station (MS) which is a portable handset (100) for use in radio communications includes an electro-mechanical actuator (121) for operation by a user to enter function instructions, the actuator having multiple actuation modes to select different functions, and a function controller (210) operably coupled to the actuator for controlling and/or selecting operational functions of the mobile station; wherein the actuator includes a movable member (122) movable by a user between different positions to provide selection of different functions of the mobile station, wherein the actuator is demountable from the handset whereby the handset is operable with or without the actuator attached. Also described is an accessory actuator suitable for use with the mobile station.

The mobile station may comprise a radio telephone for speech communication although it could alternatively or additionally provide radio communication of information in one or more other forms, e.g. data, picture or video information. The mobile station may be operable to provide communications with other mobile or fixed stations operating in a cellular or trunked network via a fixed infrastructure including one or more base stations in the system and/or directly. The mobile station may be suitable for use by professional radio users such as emergency services.

## Description

### Field of the Invention

This invention relates to a mobile station for use in radio communications and an actuator therefor. In particular, the invention relates to a mobile station for use as a communications unit such as a radio telephone, the mobile station including an actuator to control functions of the mobile station and an actuator therefor.

### Background of the Invention

Wireless communication systems, for example cellular telephony or private mobile radio (PMR) communication systems, typically provide for radio telecommunication links to be arranged between a number of user wireless communication units, often referred to as mobile stations ('MS's). Such links may be via a system infrastructure or directly between MSs.

Each MS typically includes a RF transceiver (transmitter and receiver), processors which process data transmitted and received and process and store internal data relating to operation of the MS, an input transducer such as a microphone to convert speech into electronic signals and an output transducer such as a speaker to make the opposite conversion. Each MS also includes a user interface keyboard to enter alphanumeric data and instructions and a display to indicate various forms of information to the user, e.g. telephone numbers, status messages, alert messages and the like.

In certain applications, MSs are designed for use by professional users such as members of the emergency services such as police, fire services, paramedics etc. Such MSs have a number of intricate functionalities to suit their specialist use. However, usually, such MSs have conventional user interface keypads and other function keys which offer only very small actuator keys or buttons, which may not be easy to use. For example, when some users such as firefighters use such MSs they may wear security/protection gloves in some emergency situations. This can make it difficult or even impossible to operate the conventional keypad and other keys effectively.

Some MSs include a special selector for scrolling through the functional menus available, but the user has to use both hands for operating such a known selector.

The known MS constructions give serious constraints in some specialist applications, such as use by firefighters.

### Summary of the invention

In accordance with a first aspect of the present invention there is provided a mobile station (MS) which is a portable handset for use in radio communications including an electro-mechanical actuator for operation by a user to enter function instructions, the actuator having multiple actuation modes to select different functions, and a function controller operably coupled to the actuator for controlling and/or selecting operational functions of the mobile station; wherein the actuator includes a movable member which is movable by a user between different positions to provide selection of different functions of the mobile station, wherein the actuator is demountable from the handset whereby the handset is operable with or without the actuator attached.

The actuator when attached to the mobile station may have multiple actuation modes to select different functions of the mobile station.

The movable member of the actuator may be movable by a user between different positions to provide selection of different functions of the mobile station when the actuator is fitted to the handset. The movable member of the actuator may be a slidable member such a button or knob. Alternatively, the movable member could be in the form of a joystick.

The mobile station may include an electro-optical display operable to display information to the user. The information may include options relating to operation of the mobile station which are selectable by a user by use of the actuator.

The movable member of the actuator may be movable, e.g. slidable, along an axis parallel to a longitudinal axis of a casing of the mobile station. Alternatively, or in addition, the movable member may be movable, e.g. slidable, along an axis perpendicular to an axis parallel to a longitudinal axis of a casing of the mobile station.

For each axis along which the movable member of the actuator is movable, there may be a plurality of positions along the axis corresponding to different functions of the mobile station. Location of the movable member of the actuator at each of such positions may in operation cause generation of an electrical indication signal, e.g. by closing of a corresponding switch, to indicate to the function controller selection of the selected corresponding function.

The actuator may also include a button, which may be the movable member, which may be depressed in one or more selected positions of the movable member to enter a function selection signal, e.g. via an electro-mechanical switch operated by the button.

In one preferred form of the invention a menu of function options may be displayed on an electro-optical display and movement of the movable member may correspond to scrolling between options in the menu. Operation of a button on the actuator may provide a suitable signal to provide display of the menu of options on the electro-optical display of the mobile station.

Selection of one of the menu options may be effected by further movement of the movable member. This movement may be along an axis perpendicular to that giving the scrolling action.

Further movement of the movable member of the actuator may provide selection of a previously displayed menu or information.

The mobile station according to the invention may comprise a radio telephone although it could alternatively or additionally provide radio communication of information in one or more other forms, e.g. data, picture or video information. The mobile station may be operable to provide for example communications with other mobile or fixed stations operating in a cellular or trunked network (e.g. a TETRA network) via a fixed infrastructure including one or more base stations in the system, i.e. in a trunked mode of operation (TMO), and/or directly in a direct mode of operation (DMO).

In the mobile station according to the invention the actuator, with its operational connection to the function controller, beneficially provides an alternative function selector, e.g. for use as a steering key which can be used to navigate through functions presented as displayed options, e.g. in menus, and to select options presented. This function selector may be used optionally by a user according to the user's specialist application Thus, the actuator may be fitted and suitably be operated by a user in difficult conditions, e.g. even when the user is wearing security/protection gloves. If the actuator is not fitted, the mobile station operates in a conventional manner with control signals entered via a keypad.

Desirably, the actuator is fitted on a side face (as distinct from a front face) of the mobile station thereby allowing user operation of the actuator with one hand, particularly the thumb of one hand, whilst holding the mobile station. The user may also easily operate the actuator whilst holding the mobile station near to his/her face to send and receive speech communications.

The actuator may include an active device which recognizes its own movement, e.g. slide of a slidable member or button depressing within the actuator, in a known manner. The device may be powered by the power source, e.g. battery, of the mobile station. Thus, in this case the actuator itself includes its own intelligence, e.g. a signal processor which may be a small and cheap processor, to recognise the movement of the movable member of the actuator. This processor then can initiate appropriate signals within the mobile station, e.g. to specified pins that are contacted to an interface controller of the mobile station and eventually to a function controller of the mobile station (unless the interface controller also acts as function controller). The processor may be programmed with a software program that is similar to that used in a known interface controller in a mobile station, e.g. to receive instructions from a navigation key pad.

The mobile station according to the invention may include conventional function control buttons and keys including navigation keys for scrolling through displayed menus on a front face of the mobile station. However, additional provision of the optional actuator gives the user additional ability to control the mobile station even in difficult circumstances.

According to a second aspect of the present invention there is provided an actuator adapted for use with the mobile station according to the first aspect.

Embodiments of the present invention will now be described by way of example only, with reference to the accompanying drawings, in which:

### Brief Description of the accompanying drawings

FIG. 1 is a front view of a mobile radio unit embodying the invention;
FIG. 2 is a side view of the unit shown in FIG.1.
FIG.s 3 to 6 illustrate various modes of operation of a button shown on the side of the unit in FIG.s 1 and 2.
FIG.s 7 to 13 illustrate various examples of use of the button shown in FIG.s 3 to 6 together with corresponding information shown on a display on the front of the of the unit of FIG. 1.
FIG. 14 is a schematic functional block diagram of the mobile radio unit shown in of FIG.s 1 and 2.
FIG. 15 is a side view of the unit of FIG. 1 with an actuator shown in FIG. 1 detached from the mobile radio unit.
FIG. 16 is a side view of the actuator shown in FIG. 1 detached from the radio unit.
FIG. 17 is a front view of the actuator of FIG. 16.
FIG. 18 is a rear view of the actuator of FIG. 16.
FIG. 19 is a front view of the unit of FIG. 1 with the actuator 121 of FIG. 16 being introduced toward the unit for fitting the actuator to the unit.

### Detailed description of embodiments of the invention

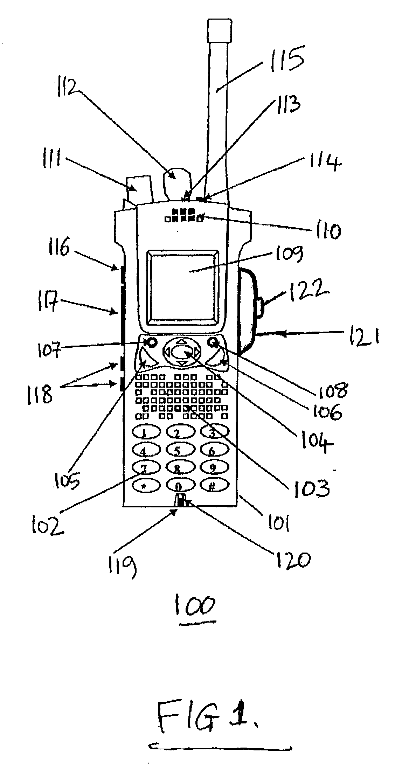

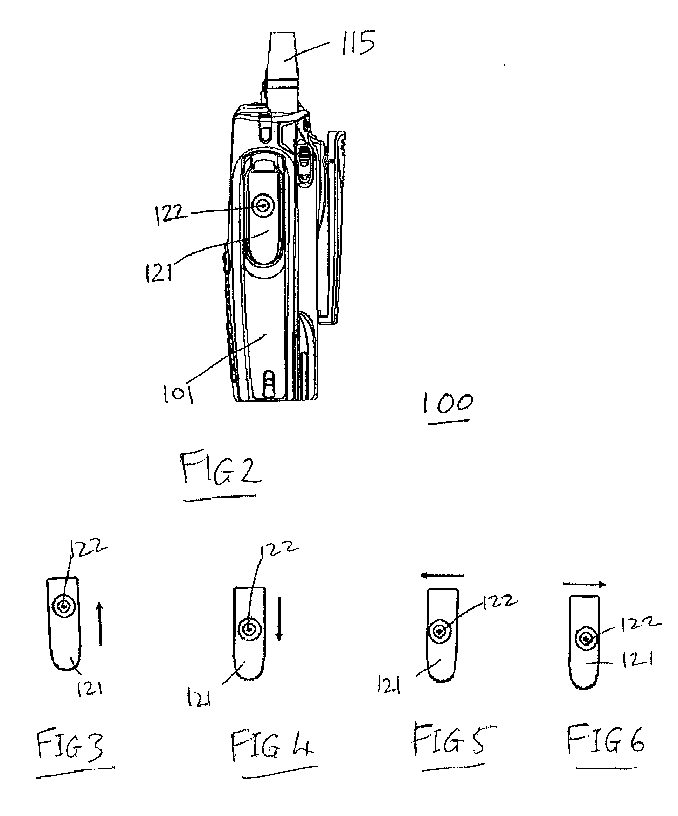

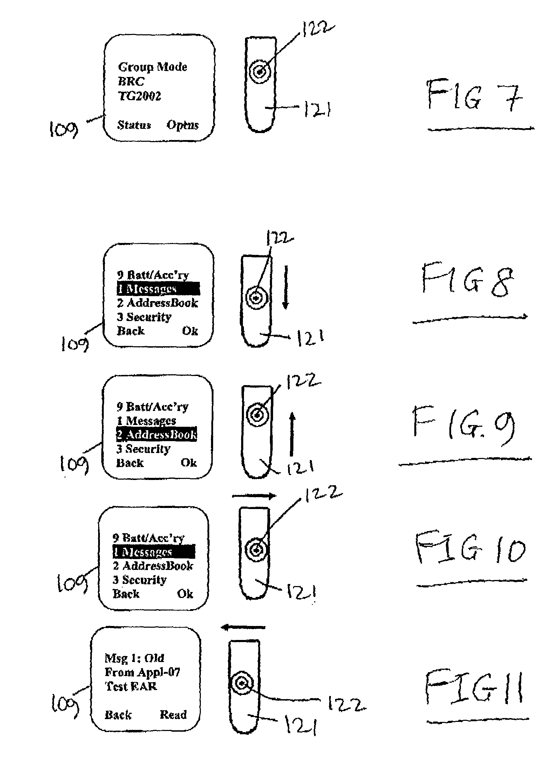

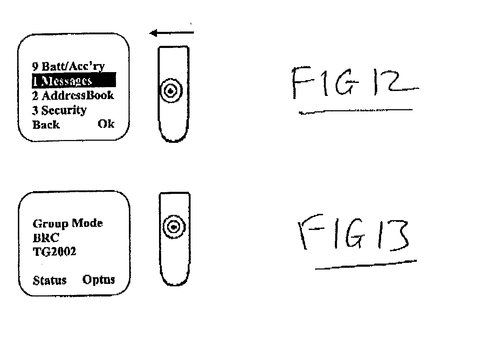

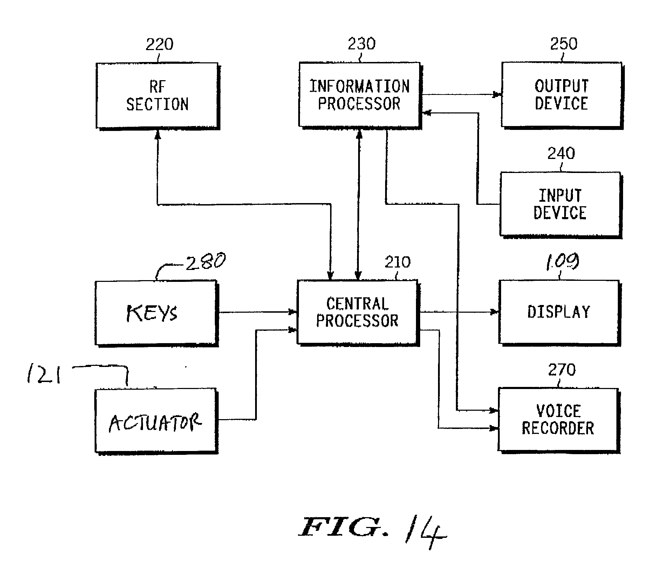

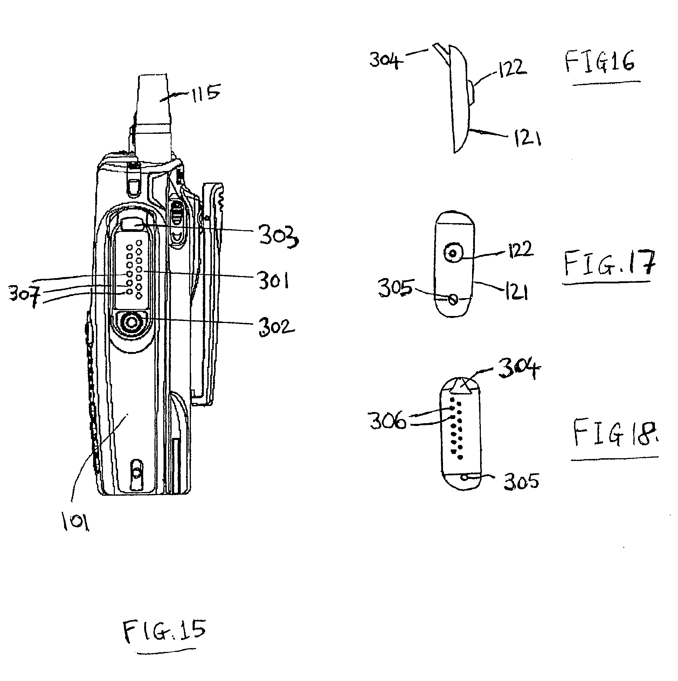

As shown in FIG. 1, a mobile radio unit 100 has a case 101 having on its front face a keypad 102. The unit 100 also has above the keypad 102 on the front face a loudspeaker 103 above which is four way navigation key 104, a mode key 105 and a send/end key 106. The navigation key 104 has a rocker mechanism (not shown) about its centre and is operated by depressing the key in one of its four positions where arrows are shown and this causes closing of an underlying switch (not shown), e.g. by contact with an underlying conductor (not shown), to enter suitable control signals in a known manner. An electro-optical display 109 is provided above the navigation key 104. Adjacent to the navigation key 104 there is a soft key 107 and a soft key 108. These allow 'enter' and 'back' selection instructions to be made in respect of information shown on the display 109. Near the top of the front face there is an earpiece 110 (for provision of audio outputs obtained from full duplex communications, e.g. via a conventional telephone network, as distinct from half duplex calls from the trunked network provided as outputs by the loudspeaker 103). On the top face of the unit 100 there are provided a volume control and on/off knob 111, a talkgroup selector 112, a led (light emitting diode) indicator light 113, an emergency button 114 and an antenna 115 (inside an outer protective casing). On the side face of the unit 100 (the left side as seen in FIG. 1) there are various further control buttons, namely a backlight button 116, a PTT (push to talk) button 117 and programmable buttons 118. At the bottom of the front face of the unit 100 there is a VA connector 119 (for cable connection to a computer, e.g. to update software stored by the unit 100) and a microphone 120.

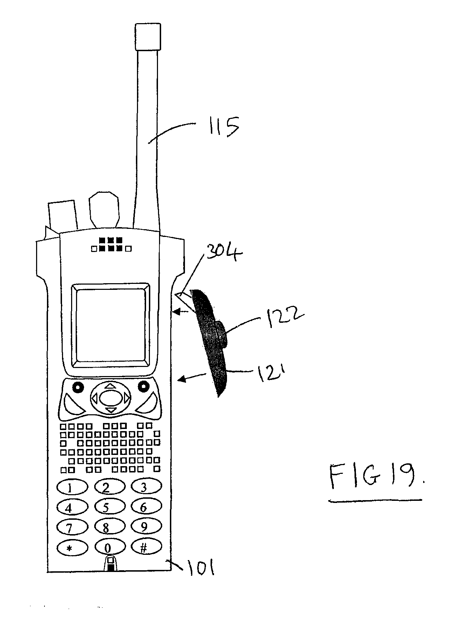

All of the components and features of the unit 100 described so far are known. However, the unit 100 also has provided on its side face (the right side as shown in FIG. 1) a steering actuator 121 in accordance with an embodiment of the invention. The front of the steering actuator 121 is also seen in FIG. 2 which is a side view of the unit 100. The actuator 121 includes a button or knob 122 whose operation is described in more detail later.

The actuator 121 is demountable and can be either attached to the unit 100 for use in a manner to be described later or removed when inconvenient, e.g. when a user wishes to carry the unit 100 in a pocket or holster without the actuator 121 protruding or does not need the additional functionality provided by the actuator 121. The unit 100 may be operated in a conventional manner without the actuator 121 attached or in a manner to be described with the actuator 121 attached. Attachment to or removal from the unit 100 of the actuator 121 may be carried out in a simple and quick manner by a user.

FIG.s 15 to 19 illustrate fitting of the actuator 121 to the unit 100. FIG. 15 shows the unit 100 without the actuator 121 present. The unit 100 includes on its side face the following items to receive the actuator 121: a contact plate 301 having a series of pin holes 307, an accessory adjustment slot 303 and a threaded socket 302. FIG.s 16 to 18 show the actuator 121 removed from the unit 100. The separate actuator 121 includes a connector plug 304, a screw 305 and a series of connector pins 306. FIG. 19 shows the actuator 121 being introduced toward the unit 100 for fitting. The connector plug 304 is engaged with the slot 303. The slot 303 is angled and has a gradual taper and the connector plug 304 has a complementary shape which adjusts the position of the actuator 121 as it enters the slot 303 so that the connector pins 306 find and fit in the pin holes 307. The actuator 121 is rigidly fixed to the unit 100 by engaging the screw 305 in the threaded socket 302.

The actuator 121 when attached to the unit 122 in the manner described operates in a manner similar to known actuators that are permanently fixed to a mobile station. The pins 306 contact corresponding conductor regions (not shown) within the unit 100. The actuator 121 thereby obtains electrical power from the power supply of the unit 100 via the pins 306. The actuator 121 includes a known microcontroller (not shown) which produces electrical signals according to mechanical operations applied to the button 122 of the actuator 121 in one of the ways described earlier. The signals are sent to the internal operational parts (not shown) of the unit 100 via the pins 306. The button 122 may be depressed and may be slid vertically (parallel to an axis running along the side face of the unit 100) and horizontally (across the side face along an axis perpendicular to an axis running along the side face of the unit 100) to produce signals in a manner to be described below.

Thus, with the actuator 121 fixedly attached to the unit 100 in the manner described, a user is able to apply control signals to the unit 100. Mechanical actions of the user applied to the button 122, which can move or be depressed relative to the body of the actuator 121 to which the button 122 is attached, are converted into electrical signals by (a microcontroller of) the actuator 121 in a known manner and are passed via the pins 306 to the unit 100 to be used in a manner to be described later.

FIG.s 3 to 6 illustrate how the actuator 121 may be operated by a user. The button 122 has may be slid from a start position upward as indicated by the arrow in FIG. 3 to one or more upper positions. The button 122 may also be slid from the start position downward as indicated by the arrow in FIG. 4 to one or more lower positions. The button 122 may also be slid from the start position sideways to the left as indicated by the arrow in FIG. 5 to one or more left side positions. The button 122 may also be slid from the start position sideways to the right as indicated by the arrow in FIG. 6 to one or more right side positions. At each of the positions, including the start position, a corresponding electrical signal is generated by a signal generation mechanism of the microcontroller (not shown) indicating the position of the button 122 in a known manner.

The button 122 may be put in each of the positions described above, other than the start position, by the user sliding the button 122 and holding the button 122 in each position. The button 122 may return by a spring action to the start position when it is released by the user.

When the button 122 on the actuator 121 is pressed by the user in the start position or any of the positions described above, a respective instruction signal may be generated by a microcontroller (not shown) of the actuator in a known manner.

Examples of use of the button 121 of the actuator 121 with the unit 100 operational are illustrated in FIG.s 7 to 11.

In FIG. 7, the button 122 is in the start position and the button 122 is pressed. A menu of options is presented on the display 109 (seen on the front face of the unit 100 by the user). This is the idle position of menu operation. At the bottom of the screen on the display 109 the words 'Status' and 'Options' are displayed to indicate that Status and Options may be chosen by sliding the button 122 respectively to the left or right. Each selected (highlighted) menu item is defined in software programmed in the unit 100, and highlighting or selection of a menu item is recognised by a corresponding signal generated by recognition of the position of the button 122, e.g. as described earlier. The implementation based on the software may be similar to that for a conventional user interface as on the front face of the unit 100 and shown in FIG. 1.

In FIG. 8, another option menu has been chosen already and is shown on the display 109. The button 122 is moved from the start position to each of several lower positions in turn and this has the effect of scrolling a cursor on the display 109 downward through the menu of options shown. The number of visible menu items depends on the number of items or options in the menu. For example, there may be a maximum of 4 displayed items which can be shown at a time for menus with greater than 4 items. For menus with less than 4 items, all items may be shown at once.

In menus with more than 4 items the next item (no. 5, and then no. 6) will become visible when scrolling in the indicated direction. For example, the menu shown on the display 109 in FIG. 8 has nine items of which numbers 9, 1, 2 and 3 are displayed.

In FIG. 9, the button 122 is moved upward through each of several upper positions in turn and this has the effect of scrolling a cursor on the display 109 upward through the menu of options shown.

In FIG. 10, the button 122 is moved to the right. This enters a start selection instruction signal for the menu option highlighted, namely 'Messages', option item number 1.

In FIG. 11, a message is displayed from the action described with reference to FIG. 10. The button 122 is now moved to the left. This acts as a 'back button' and enters an instruction signal to return the screen displayed on the display 109 to the menu previously seen in FIG. 9. The actions of moving the button 121 to the right or to the left are indicated on the display 109 by 'OK' and 'Back' in the lower corners of the screen displayed on the display 109.

In FIG. 12, the menu selected by the action described with reference to FIG. 11 is again seen. The button 122 is now again moved to the left and the screen displayed by the display 109 is returned, as shown in FIG. 13, to display the menu originally seen in FIG. 7.

FIG. 14 is a schematic functional block diagram of main functions of the unit 100 shown in FIG. 1. The actuator 121 is connected to a central processor 210, e.g. one or more programmed microchips, which selects and controls operations of the unit 100. The processor 210 communicates with a RF section 220 which processes signals sent from and received by the unit 100 by RF communication with other RF units (not shown). Input user information, e.g. speech, data, picture or video information, is input by an input device 240 (in practice this may be a plurality of different devices for input of various forms of information). In a simple form the input device 240 is the microphone 120. The input information is fed to and processed by an information processor 230, operating in conjunction with the processor 210, and then to the RF section 220 for outward transmission as a RF signal. The RF section includes the antenna 115. Similarly, information received by the RF section 220 is processed by the processor 230 operating in conjunction with the processor 210 and is delivered to an output device 250. (In practice this may be a plurality of different devices for output of various forms of information). In a simple form the output device 250 is the loudspeaker 103.

Information relating to operations of the unit 1 may be displayed to the user by the display 109 under control of the processor 210.

Input operating instructions may be applied by a user via the actuator 121 and alternatively via conventional keys conventional keys 280. Effectively, the keys 280 comprise all of the keys and buttons described with reference to FIG. 1 excluding the actuator 121. These instructions are delivered to the processor 210 to which the actuator 121 and the keys 280 are connected.

Functions of the unit 100 may be selected by the actuator 121 and/or by the keys 280 in the manner described above using reference to information shown on the display 109. Such information is also controlled by the central processor 210 which is connected to the display 109 (in a conventional manner via a display driver device - not shown). Thus the actuator 121 provides an optional additional selection and instruction input device which is alternative to the keys 280 thereby giving the user more flexibility depending on the conditions under which he/she is working.

As noted earlier, the actuator 121 which may be attached to and detached from the unit 100 in an easy and quick manner provides a more convenient input entry interface for certain use situations. For example, where the user has to wear security gloves, e.g. where the user is a member of the fire service, the actuator 121 provides a more robust interface avoiding the use of keys (on a keypad) which may be difficult or impossible to operate in such a situation.

## Claims

1. A mobile station which is a portable handset (100) for use in radio communications including an electro-mechanical actuator (121) for operation by a user to enter function instruction and a function controller (210) operably coupled to the actuator for controlling and/or selecting operational functions of the mobile station; wherein the actuator includes a movable member (122) movable by a user between different positions to provide selection of different functions of the mobile station, wherein the actuator is demountable from the handset whereby the handset is operable with or without the actuator attached.

2. A mobile station according to claim 1 wherein the actuator is attachable to the handset on a side face of the handset.

3. A mobile station according to claim 1 or claim 2 wherein the movable member is a slidable member which is slidable by a user between different positions to provide selection of different functions of the mobile station when the actuator is fitted to the handset.

4. A mobile station according to any one of the preceding claims which includes an electro-optical display operable to display information to the user, wherein the display is operable to display information which includes options relating to operation of the mobile station which are selectable by a user by use of the actuator.

5. A mobile station according to any one of the preceding claims wherein the movable member of the actuator is movable along an axis parallel to a longitudinal axis of a casing of the mobile station.

6. A mobile station according to any one preceding claim wherein the movable member of the actuator is movable along an axis perpendicular to an axis parallel to a longitudinal axis of a casing of the mobile station.

7. A mobile station according to any one preceding claim wherein the movable member is movable along one or more axes and, for each axis along which the movable member is movable, there are plurality of positions along the axis corresponding to different functions of the mobile station.

8. A mobile station according to claim 7 wherein location of the movable member at each of said positions in operation causes generation of an electrical indication signal to indicate to the function controller selection of the selected corresponding function.

9. A mobile station according to any one of the preceding claims wherein the movable member when moved to a position selected by a user returns to a start position when released by the user.

10. A mobile station according to any one preceding claim wherein the actuator includes a button which may be depressed in one or more selected positions of the movable member to enter a function selection signal.

11. A mobile station according to claim 10 wherein the button is also the movable member.

12. A mobile station according to any one of claims 4 to 11 wherein in operation the information displayed by the display includes a menu of functions and a movement of the movable member of the actuator corresponds to scrolling between options in the menu.

13. A mobile station according to claim 12 wherein the actuator includes a button and operation of the button by a user provides a signal to provide display of the menu of options on the display.

14. A mobile station according to claim 12 or claim 13 wherein in operation selection of one of the menu options is effected by further movement of the movable member of the actuator along an axis perpendicular to that giving the scrolling action.

15. A mobile station according to any one of claims 10 to 14 wherein in operation further movement of the actuator provides selection of a previously displayed menu or information.

16. A mobile station according to any one preceding device wherein the actuator comprises an active device which recognizes movement of the movable member and generates a signal accordingly.

17. A mobile station according to any one preceding claim wherein the mobile station comprises a radio telephone or other unit providing radio communication of information.

18. A mobile station according to any one of the preceding claims wherein the actuator is attachable to the handset by a plug and socket joint and a screw attachment.

19. A mobile station according to any one of the preceding claims wherein the actuator is electrically connectible to the mobile station by a series of connector pins.

20. An electro-mechanical actuator adapted for attachment to a mobile station to allow operation by a user to enter function instructions to the mobile station, the actuator when attached to the mobile station having multiple actuation modes to select different functions and being movable by a user between different positions to provide selection of different functions of the mobile station.
